# FASCICULE DE BREVET EUROPEEN

(11) **EP 3 162 741 B1**
(45) Date de publication et mention de la délivrance du brevet: **25.11.2020**
(21) Numéro de dépôt: 16194378.2
(22) Date de dépôt: 18.10.2016
(51) Int. Cl.: B65G 47/90, B65G 59/02, B65H 3/50

(54) **METHODE D'EXTRACTION**
EXTRAKTIONSMETHODE
EXTRACTION METHOD

(30) Priorité: 30.10.2015 FR 1560451
(43) Date de publication de la demande: 03.05.2017
(73) Titulaire: Sidel Packing Solutions, 21910 Corcelles-les-Cîteaux (FR)
(72) Inventeur: GAUTHERON, Anthony, 21910 CORCELLES LES CÎTEAUX (FR)
(74) Mandataire: Sidel Group

(56) Documents cités:
- EP-A1- 1 264 792
- WO-A1-2009/092166
- DE-A1-102007 026 956
- DE-A1-102012 018 438
- DE-B3-102006 047 064
- JP-A- H11 139 601
- JP-A- 2000 159 362
- JP-A- 2014 037 286
- JP-U- S5 424 879
- JP-U- H03 122 027
- US-A1- 2002 185 806
- US-B1- 7 325 667

## Description

La présente invention relève du domaine du conditionnement en caisses cartonnées et a pour objet un procédé pour extraire d'une pile un lot de cartons situé en partie supérieure de la pile.

Les cartons sont en effet généralement sous forme de plaque plane à plier ultérieurement, et sont disposés sur une palette ou support plat, les uns au-dessus des autres, non reliés entre eux. Ces cartons alors sous forme de plaque peuvent être organisés en plusieurs colonnes les unes à côté des autres. Il est alors nécessaire d'en extraire une partie supérieure pour l'emmener dans la machine dans laquelle la caisse sera formée. Cette machine peut être une formeuse de caisse ou avoir d'autres fonctions comme l'encaissage, par exemple.

Dans ce domaine, US5102292 décrit par exemple un dispositif muni d'une pelle inférieure qui vient s'insérer par le côté sous le lot supérieur de plaques à saisir, pendant que des plots viennent presser le lot par le dessus. La pelle a alors une extrémité suffisamment fine pour s'insérer entre le lot et le carton sous lui. Un même type d'insertion est proposé par US2003/0123962, le lot étant cependant pressé par le haut au moyen de ventouses. Dans les deux cas, l'appui par le haut a essentiellement pour but de maintenir le lot à saisir, alors que la pelle ou lame est insérée entre deux cartons plats. Cette force a pour but d'éviter que la pelle ne pousse horizontalement le lot à saisir, ce qui peut faire tomber les plaques.

US2002/0154986 propose quant à lui, après l'insertion de la lame, d'insérer le long de la lame et sous elle, une plaque plus rigide permettant alors de soulever tout le lot. Une contre plaque vient ensuite serrer le lot. L'inconvénient est que la position de la lame et la position de la plaque plus rigide doivent être les mêmes. Il est donc obligatoire d'insérer la lame là où il faudra tenir le lot avec la pince que forment ensemble la plaque et la contre plaque.

EP530426 divulgue, quant à lui, un principe dans lequel les cartons sous le lot à extraire sont écrasés pour permettre l'insertion frontale de la pelle.

Une insertion d'une pelle ou lame entre deux plaques, comme enseignée dans ces documents, présente toutefois l'inconvénient de risquer d'amener la pelle directement contre une plaque, ce qui risque alors non seulement de dégrader la voire les plaques contre laquelle ou lesquelles elle vient buter, mais aussi de pousser la pile, voire d'en faire tomber tout ou partie. Exercer une pression sur le haut de la colonne dans laquelle la pelle est insérée ne résout pas le problème de la dégradation des produits au niveau de la tranche. JP 08067364 décrit un procédé selon le préambule de la revendication 1.

Certaines réalisations proposent encore de disposer la palette de sorte que les colonnes de plaques arrivent contre des surfaces d'appui verticales qui opposent une force au mouvement d'insertion de la pelle, dans le but de stabiliser la colonne. Ce genre de principe ne peut donc fonctionner que dans un tel environnement, et impose de fortes contraintes sur la pile elle-même puisqu'elle doit toujours pouvoir arriver contre une telle surface de résistance.

Dans ce contexte, l'invention vise à améliorer l'état de la technique existant en proposant une solution d'extraction d'une partie d'extrémité supérieure d'une colonne de plaques de cartons, qui soit précise, qui ne dégrade pas les cartons, qui puisse être utilisée pour tout type de configuration, et/ou qui soit facile à implémenter.

Pour ce faire, l'invention propose d'opérer en deux temps, à savoir, une saisie ferme du lot, précédée par une séparation du lot qui se fait en amenant un outil de séparation contre le dessous du lot, cette dernière ayant pour but de permettre la mise en place de l'outil de saisie.

Un dispositif d'extraction est décrit Z pour déplacer, depuis une pile, un lot de produits plats superposés non liés entre eux et formant le haut de ladite pile, ledit dispositif d'extraction comprenant un châssis, et, monté dans ledit châssis, un moyen de préhension sous forme d'étau piloté pour saisir fermement par la tranche le lot à extraire.

Ce dispositif comprend, en outre, monté dans le châssis, un moyen de séparation, séparé du moyen de préhension pour pouvoir agir chacun dans une zone différente du lot, ledit moyen de séparation portant une surface d'appui pour venir sous le lot à extraire de sorte à l'écarter par le dessous du reste de la pile et dégager ainsi un espace permettant la prise ultérieure du lot par le moyen de préhension.

L'invention a pour objet un procédé selon la revendication 1.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 illustre de façon schématique une tête de préhension avec un degré de mobilité pour l'outil de préhension ;
- la figure 2 illustre une tête de préhension avec deux degrés de mobilité ;
- la figure 3 schématise la tête de préhension tenant un lot de produits ;
- la figure 4 montre, dans sa partie A, la position de l'outil pour la séparation du lot, et, dans sa partie B, la position de l'outil pour le serrage et la préhension du lot ;

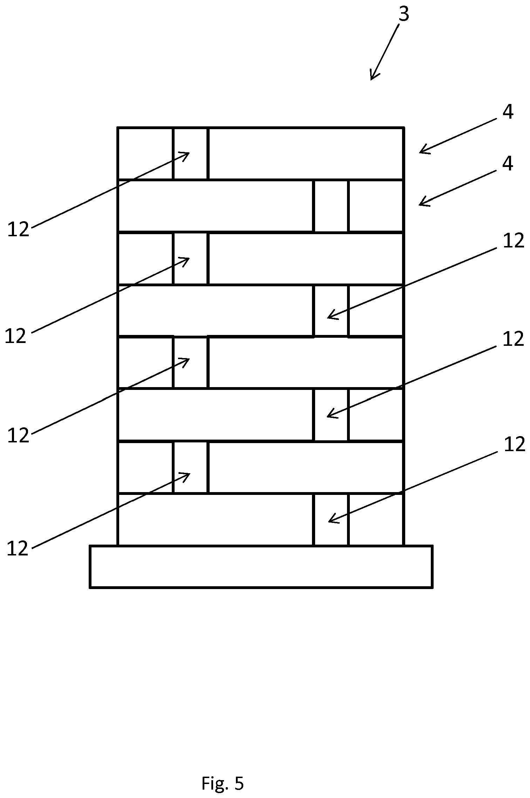

- la figure 5 illustre le positionnement en quinconce des lots de produit ;

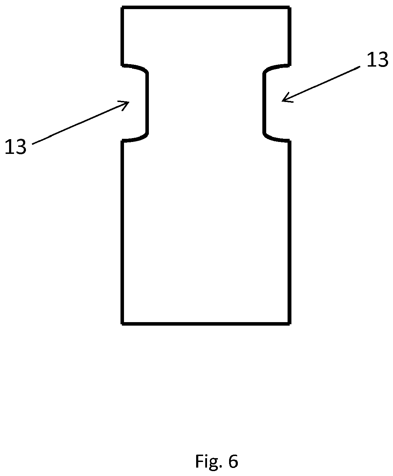

- la figure 6 schématise un produit avec des découpes d'échancrure ;
- la figure 7 schématise l'outil de préhension montée sur un robot.

L'invention a donc tout d'abord comme objet un dispositif d'extraction 1 pour déplacer, depuis une pile 3, un lot 4 de produits 2 plats superposés non liés entre eux et formant le haut de ladite pile 3, ledit dispositif d'extraction 1 comprenant un châssis 5, et, monté dans ledit châssis 5, un moyen de préhension 6 sous forme d'étau piloté pour saisir fermement par la tranche le lot 4 à extraire, de sorte que le moyen de préhension 6 peut emmener tout le lot 4, le dispositif d'extraction 1 comprenant selon l'invention aussi un moyen robotique 7 pour déplacer le châssis 5 avec le lot 4 de produits 2 saisis par le moyen de préhension 6.

Le dispositif d'extraction 1 sert donc à ôter d'une pile 3 une pluralité de produits 2 à partir de celui le plus haut dans la pile 3. Comme il sera encore décrit plus loin, les produits 2 sont généralement organisés en groupe, ces groupes étant montés tête bêche l'un au-dessus de l'autre. Le dispositif d'extraction 1 assure alors l'extraction depuis la pile 3 du premier groupe en partant du haut dans la pile 3, qui forme le lot 4 à extraire.

Selon l'invention, le dispositif d'extraction 1 comprend, en outre, monté dans le châssis 5, un moyen de séparation 8, séparé du moyen de préhension 6 pour pouvoir agir chacun dans une zone différente du lot 4, ledit moyen de séparation 8 portant une surface d'appui 9 pour venir sous le lot 4 à extraire de sorte à l'écarter par le dessous du reste de la pile 3 et dégager ainsi un espace permettant la prise ultérieure du lot 4 par le moyen de préhension 6.

Le moyen de préhension 6 peut emmener le lot 4 éventuellement sans aucun autre moyen de maintien du lot 4. Ce qui signifie qu'il est positionné de sorte à éviter que la pesanteur déforme le lot 4 de cartons maintenu en porte à faux depuis sa tranche.

Pour éviter de dégrader les produits 2 en insérant un tel moyen de préhension 6 au cœur d'une pile 3, le dispositif d'extraction 1 comprend un moyen de séparation 8 distinct qui a pour fonction essentielle de libérer une partie de la surface inférieure du lot 4. Le moyen de préhension 6 peut ensuite saisir le lot 4 contre cette surface inférieure libérée du contact avec la pile 3 sous le lot 4. Tant le moyen de séparation 8 que le moyen de préhension 6 viennent alors contre le lot 4 avec un mouvement vers le haut, arrivant contre la surface inférieure du lot 4.

Le moyen de séparation 8 et le moyen de préhension 6 sont séparés et donc distincts l'un de l'autre de sorte à pouvoir agir éventuellement en même temps en des endroits différents du lot 4 : au niveau de l'évidement 12 pour l'un, et au niveau d'une zone robuste du lot 4 pour l'autre.

Le moyen de séparation 8 profite de l'évidement 12 sous le lot 4 formé par les échancrures 13 superposées des produits 2 sous ledit lot 4 pour arriver au contact du lot 4 par le dessous et non par le côté. Le moyen de préhension 6 profite ensuite quant à lui de l'espace que crée le moyen de séparation 8 entre le lot 4 et le reste de la pile 3 sous lui pour arriver à son tour au contact du lot 4 par le dessous.

Une fois le lot 4 saisi par le moyen de préhension 6, il est possible de l'emmener. Le moyen de séparation 8, dimensionné pour coopérer avec les évidements 12, ne suffit pas pour tenir le lot 4 de façon satisfaisante pendant le trajet jusqu'au magasin de la machine à alimenter avec le lot 4.

Le maintien correct du lot 4 pendant le trajet jusqu'audit magasin est essentiellement assuré par le moyen de préhension 6, car ce dernier n'est pas limité par le gabarit de l'évidement 12. Le déplacement depuis la pile 3 jusqu'au magasin à charger peut se faire avec uniquement l'action du moyen de préhension 6, qui forme une pince suffisamment forte pour cela. Il est aussi possible de conserver un maintien complémentaire du lot 4 dans le moyen de séparation 8 alors sous forme de pince, pour que ledit moyen équilibre le poids du lot 4, et évite ainsi que le lot 4 ne se déforme par flexion à partir de la pince que forme le moyen de préhension 6 et d'où il s'étend en porte à faux.

Le moyen de séparation 8 et le moyen de préhension 6 doivent donc pouvoir agir à deux endroits différents du lot 4 : le moyen de séparation 8 doit pouvoir agir au niveau de l'évidement 12 que forment les produits 2 sous lui, alors que le moyen de préhension 6 doit pouvoir agir au-delà des lignes de fragilités présentes pour faciliter le pliage, et ce dans une zone à partir de laquelle le lot 4 peut être maintenu en l'air sans problème, avec une superficie d'action suffisamment grande pour garantir que l'effort de pincement soit suffisamment grand pour que les produits 2 restent les uns contre les autres sans pour autant les dégrader.

Préférablement, le moyen de séparation 8 et le moyen de préhension 6 sont donc deux moyens distincts dans le châssis 5. Ils sont éventuellement au moins temporairement éloignés l'un de l'autre au sein du châssis 5, pour que chacun puisse avoir sa zone d'action sur le lot 4. En effet, il existe généralement une période de temps au cours de laquelle le moyen de séparation 8 et le moyen de préhension 6 agissent simultanément sur le lot 4. Comme il a déjà été dit, pendant le transfert, le lot 4 peut aussi être retenu tant par le moyen de séparation 8 que par le moyen de préhension 6, qui reste alors le moyen assurant l'essentiel du portage du lot 4.

Le châssis 5 muni du moyen de séparation 8 et du moyen de préhension 6 forme donc un outil monté à l'extrémité d'un moyen robotique 7. Ce dernier en assure le mouvement par rapport à la pile 3. Le moyen de séparation 8 et/ou le moyen de préhension 6 peuvent aussi être mobiles ou mobile dans le châssis 5. Cela permet, lorsque nécessaire, de créer un déplacement par rapport au lot 4 sans pour autant déplacer le châssis 5.

Le châssis 5 peut aussi être muni de ventouses pour saisir un produit 2 par le dessus.

Comme les produits 2 de la pile 3 sont superposés dans une même orientation en groupes, ces groupes étant superposés dans des orientations différentes, et que le dispositif d'extraction 1 saisit à chaque fois un tel groupe, le nombre de produits 2 envoyés par le dispositif d'extraction 1 est stable et connu à chaque fois. Cela facilite le contrôle du remplissage du magasin qu'alimente le dispositif d'extraction 1.

Dans certaines réalisations particulières, il est envisageable que le moyen de séparation 8 soit configuré pour, outre sa présence dans l'évidement 12, s'étendre aussi contre la tranche du lot 4 à saisir au-dessus. Le moyen de séparation 8 peut alors non seulement soulever le lot 4 mais aussi le pousser grâce à cet appui. Le moyen de séparation 8 peut ainsi prendre la forme d'une plaque avec un renvoi correspondant, ce dernier arrivant à peu près verticalement une fois en fonctionnement contre la pile 3.

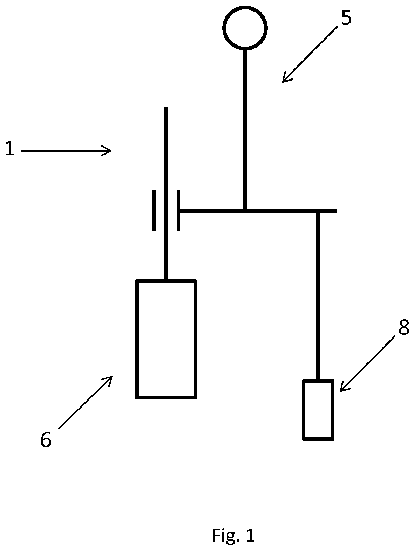

Selon une caractéristique additionnelle possible, le moyen de séparation 8 et le moyen de préhension 6 sont mobiles l'un par rapport à l'autre dans le châssis 5 le long d'une direction d'insertion frontale 10 du moyen de préhension 6 autour du lot 4, notamment grâce au montage de l'un au moins parmi le moyen de séparation 8 et le moyen de préhension 6 sur un actionneur monté dans le châssis 5 et agissant le long de ladite direction d'insertion frontale 10, voir en particulier les figures 1 à 3.

Le moyen de préhension 6 saisit le lot 4 par la tranche, comme une pince. Cette pince est essentiellement formée de deux plaques ou mors se faisant face, et destinées à coopérer, pour l'une, avec la surface supérieure du lot 4, pour l'autre, avec la surface inférieure. Le moyen de préhension 6 a aussi un fond de pince, à partir duquel s'étendent normalement ces plaques, et contre lequel la tranche du lot 4 peut venir si le moyen de préhension 6 est inséré jusqu'au contact du lot 4. La direction d'insertion frontale 10 s'étend donc essentiellement perpendiculairement au fond du moyen de préhension 6.

Aménager un mouvement de l'un par rapport à l'autre dans le châssis 5 permet d'éviter de devoir bouger tout le châssis 5 à l'aide du moyen robotique 7 lorsqu'il n'est nécessaire que de créer un mouvement, par rapport à la pile 3, de l'un ou l'autre moyen. Cela permet, par exemple, d'escamoter vers l'arrière le moyen de préhension 6 lorsque le moyen de séparation 8 approche du lot 4.

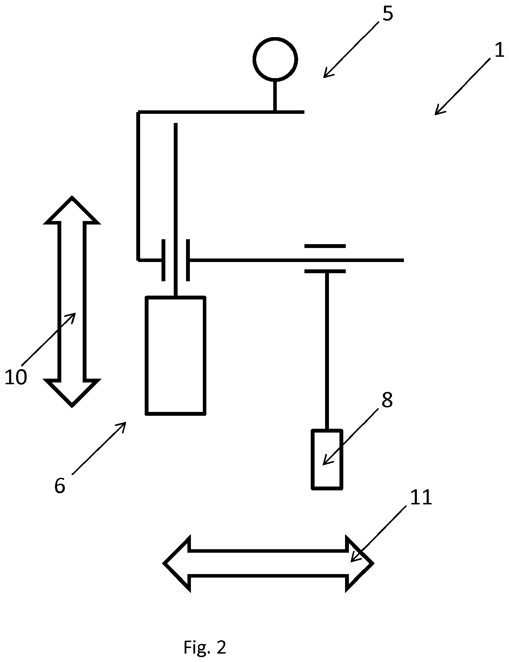

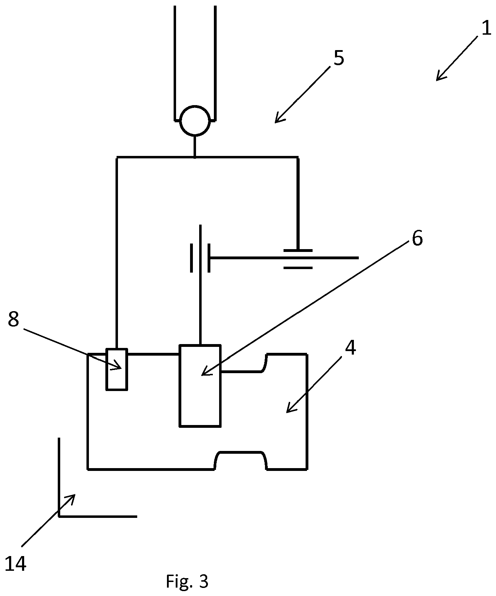

Selon une autre caractéristique additionnelle possible, le moyen de séparation 8 et le moyen de préhension 6 sont mobiles l'un par rapport à l'autre dans le châssis 5 le long d'une direction transversale 11 essentiellement perpendiculaire à une direction d'insertion frontale 10 du moyen de préhension 6 autour du lot 4 et dans le plan dudit lot 4. Un mouvement dans une telle direction transversale 11 permet par exemple de venir placer le moyen de préhension 6 contre le lot 4 à proximité du moyen de séparation 8, puis de le déplacer par rapport au lot 4 jusqu'à la position adéquate. Les figures 2 et 3 illustrent ces degrés de liberté possibles.

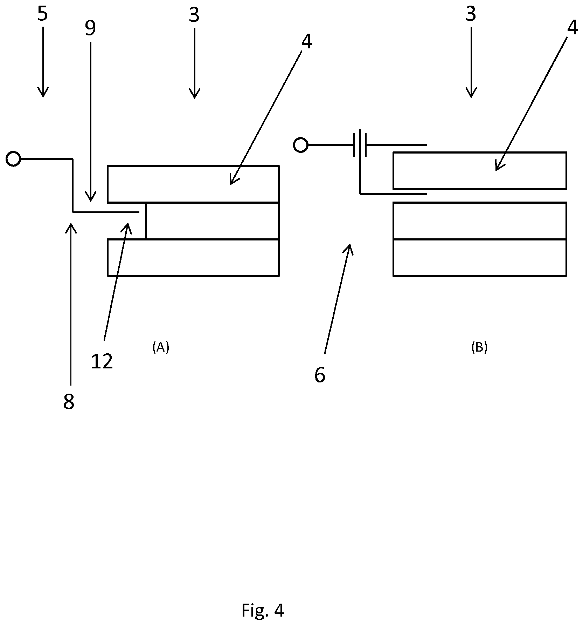

Dans des modes de réalisation privilégiés, le moyen de séparation 8 prend la forme d'un étau piloté qui peut saisir le lot 4 de produits 2 par la tranche. Comme il a déjà été dit, le moyen de séparation 8 agit pour décaler par rapport à la pile 3 le lot 4 à extraire. Pour ce faire, et afin d'éviter de déstabiliser les produits 2 empilés, le moyen de séparation 8 et en particulier la surface d'appui 9 qu'il porte, vient circuler dans l'évidement 12 sous le lot, voir figure 4A. Le moyen de préhension 6 vient saisir le lot 4 dans une autre portion du lot 4, voir figure 4B.

Le moyen de séparation 8 peut ne consister qu'en une plaque, pelle ou autres appui surfacique, portant la surface d'appui 9 à venir plaquer contre le fond du lot 4. Cela a l'avantage d'être simple. Pour permettre toutefois de mieux contrôler l'intégrité du lot 4 lors de la séparation, et aussi pour éventuellement le dégager de la pile 3 le long de mouvements plus élaborés, le moyen de séparation 8 peut lui-même saisir le lot 4 comme une pince, c'est-à-dire avec un mors contre la surface inférieure du lot 4, et avec un mors contre la surface supérieure du lot 4.

Selon une autre caractéristique additionnelle possible, le moyen de séparation 8 agit sur une surface du lot 4 qui est plus faible que celle sur laquelle agit le moyen de préhension 6. Ainsi, la surface de contact, contre la partie supérieure et/ou inférieure du lot 4, est plus faible pour le moyen de séparation 8 que pour le moyen de préhension 6. La superficie des échancrures 13 est en effet relativement faible et le montage tête bêche des groupes les uns sur les autres n'amène en outre pas forcément l'évidement 12 au niveau d'une zone idéale de maintien pour le lot 4 au-dessus.

Le moyen de préhension 6 présente, quant à lui, une superficie d'interaction avec le lot 4 plus élevée. Le moyen de séparation 8 doit pourvoir circuler dans l'évidement 12 et ne sert qu'à décaler le lot 4 pour permettre la mise en œuvre du moyen de préhension 6.

L'invention a aussi pour objet un procédé mettant en œuvre le dispositif tel que décrit ci-dessus, à savoir un procédé pour extraire d'une pile 3 verticale un lot 4 de produits 2 plats superposés non liés entre eux formant le haut de ladite pile 4, comprenant la séquence des étapes consistant à
- séparer légèrement le lot 4 du reste de la pile 3 sous lui
- saisir le lot 4 par la tranche à l'aide d'un moyen de préhension 6, et
- déplacer le lot 4 en direction d'un magasin de stockage d'une machine de traitement du type encaisseuse ou formeuse de caisse.

Lors du déplacement, le lot 4 peut n'être maintenu que par le moyen de préhension 6, ou aussi maintenu par le moyen de séparation 8, dans les cas où il est capable non seulement de pousser le lot 4 depuis le dessous, mais aussi de saisir le lot 4.

Séparer le lot 4 se fait en le soulevant par rapport à la pile 3, ce qui revient alors généralement à le pencher, ou alors en le déplaçant le long des produits 2, c'est-à-dire en faisant glisser le lot 4 sur les produits 2 du dessous.

Selon l'invention, la séparation du lot 4 est réalisée en amenant initialement une surface d'appui 9 vers le haut, contre le dessous du lot 4. Toute la surface d'appui 9 vient donc contre le lot 4 en même temps. Une fois la surface d'appui 9 contre le lot 4, il suffit soit d'amener une contre surface contre le haut du lot 4 pour fermer une pince et maintenir alors le lot 4, soit de continuer ce mouvement vers le haut pour soulever le lot 4 et le séparer de la pile 3.

En amenant la surface d'appui 9 contre le lot 4 par le dessous, il n'est pas nécessaire d'exercer un mouvement horizontal pour la mettre en position, ce qui évite donc tout risque de faire tomber les produits 2, de les dégrader, ainsi que toute nécessité complémentaire d'une contre butée.

Dans des réalisations possibles, la surface d'appui 9 arrive vers le haut et par le dessous contre le lot 4 en circulant dans un évidement 12 créé par les échancrures 13 d'une pluralité de produits 2 superposés sous le lot 4. La surface d'appui 9 est portée par le moyen de séparation 8. La surface d'appui 9 est portée par une plaque dudit moyen, ce dernier étant éventuellement pourvu d'une contre plaque pour former une pince. On comprend bien sûr que la surface d'appui 9 est amenée au cœur de l'évidement 12 par un mouvement qui a naturellement une composante parallèle au plan des produits 2. Mais cette insertion se fait au niveau de l'évidement 12 et non contre la matière des produits 2, donc sans risque.

Les produits 2 présentent des échancrures 13 dans leur périmètre autrement rectangle. Cette superposition d'échancrures 13 crée un évidement 12 à partir de la surface extérieure de la pile 3. C'est dans cet évidement 12 que vient la surface d'appui 9. Il lui permet de toucher le lot 4 par le dessous, puisque le lot 4 est posé dans une orientation différente et bouche ainsi l'évidement 12 par le haut et offre à la surface d'appui 9 la possibilité d'un contact depuis le dessous, vers le haut.

Selon une caractéristique additionnelle possible, la séparation du lot 4 est réalisée à l'aide d'un moyen de séparation 8 en forme d'étau piloté pour prendre le lot 4 par la tranche et dont l'un des mors porte la surface d'appui 9. L'autre mors vient donc au contact de la surface extérieure du produit 2 le plus haut dans le lot 4.

Selon une autre caractéristique additionnelle possible, saisir le lot 4 pour le déplacer est réalisé à l'aide d'un moyen de préhension 6 du type étau piloté, lequel agit dans une zone du lot 4 différente de celle où agit la surface d'appui 9. Le moyen de séparation 8 et le moyen de préhension 6 peuvent tous les deux contribuer à maintenir le lot 4 dans le châssis 5 lors du transfert.

Enfin, dans des modes de réalisation possibles, le moyen de préhension 6 est amené dans sa position de saisie du lot 4 en le déplaçant, par rapport à la surface d'appui 9, le long de la tranche du lot 4 saisi et/ou vers la tranche opposée. Une fois que le moyen de séparation 8 a décalé le lot 4 pour permettre l'insertion sans heurt du moyen de préhension 6, ce dernier peut être amené en position en déplaçant de façon adéquate le châssis 5 dans lequel il est monté immobile, et/ou en déplaçant le moyen de préhension 6 au sein du châssis. Ce déplacement dans le châssis 5 peut se faire le long de la direction d'insertion frontale 10 et/ou le long de la direction transversale 11.

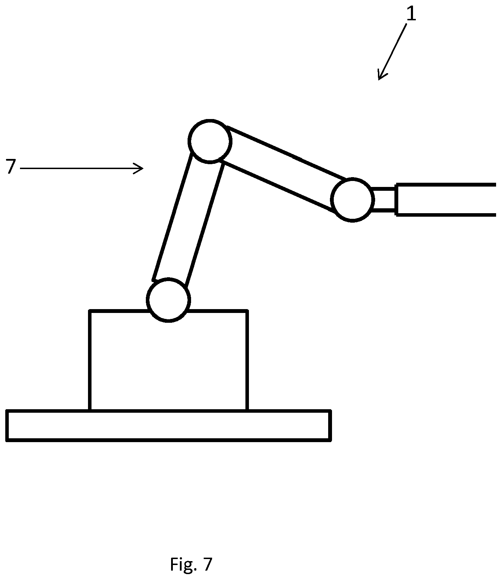

Dans le mode de réalisation illustré notamment à la figure 7 et selon l'invention, le dispositif d'extraction 1 comprend un châssis 5 destiné à être monté à l'extrémité d'un moyen robotique 7, du type robot multi axe. La pile 3 présente une superposition de produits 2, normalement horizontaux. Ces produits 2 sont en particulier de faible épaisseur par rapport à leur superficie, et peuvent donc être du type plaques, éventuellement cartonnées. Les produits 2 peuvent se trouver sur une palette qui en comprend un grand nombre. Le dispositif d'extraction 1 est pourvu de deux moyens différents, à savoir, d'une part, un moyen de séparation 8, et, d'autre part, un moyen de préhension 6.

Le moyen de préhension 6 sert à saisir un lot 4 de produit 2 de la pile 3 pour le déplacer depuis ladite pile 3 jusqu'à, par exemple, un magasin d'une machine du type formeuse de caisse. Les produits 2 ne sont pas liés entre eux, et il est donc important que le moyen de préhension 6 exerce une force suffisante pour maintenir les produits 2 ensemble. Le moyen de préhension 6 agit comme un étau qui vient serrer ensemble les produits 2 d'un même lot 4, suffisamment fortement pour éviter toute séparation. Le moyen de préhension 6 présente donc une paire de mors, destiné, chacun, à venir contre l'un des deux produits 2 d'extrémité du lot 4.

L'opération d'extraction et le déplacement entre la pile 3 et sa destination finale doit bien entendu se faire sans dégrader les produits 2. La superficie du contact entre le moyen de préhension 6 et le lot 4 est donc suffisamment élevée pour répartir la pression nécessaire à la cohésion du lot 4. De plus, le lot 4 est amené à être tourné lors de son trajet. Il est ainsi nécessaire de positionner le moyen de préhension 6 sur le lot 4 de sorte à éviter que le poids et/ou l'inertie du lot 4 ne déforme les produits 4, ces derniers présentant généralement, pour en faciliter les pliages, des lignes de fragilité telles que des marquages ou découpes.

Le moyen de préhension 6 vient donc saisir un lot 4 par la tranche, d'une manière et à un endroit qui permettent de le maintenir correctement pendant le trajet et sans en provoquer de déformation. Le moyen de préhension 6 a donc des caractéristiques géométriques qui pourraient l'amener à dégrader les produits 2 lorsqu'il est inséré entre deux produits 2 de la pile 3.

L'invention permet une mise en place du moyen de préhension 6 sans aucun risque de dégradation de produits 2, et ce grâce au moyen de séparation 8, comme décrit ci-dessous.

Le moyen de séparation 8 sert essentiellement à séparer le lot 4 à extraire des produits 2 sous lui, pour pouvoir ensuite venir positionner le moyen de préhension 6, à l'endroit requis pour sa fonction, comme décrit ci-dessus, et ce compte tenu de la taille qu'il doit avoir pour maintenir fermement le lot 4.

Le moyen de séparation 8 dégage donc la surface du produit 2 le plus bas dans le lot 4 pour que le moyen de préhension 6 puisse être positionné contre elle. La surface inférieure est libérée en décalant, à l'aide du moyen de séparation 8, l'ensemble du lot 4. Décaler le lot 4 de sorte à en libérer suffisamment la surface inférieure permet ensuite de mettre en œuvre le moyen de préhension 6. Plusieurs cinématiques sont possibles. Le lot 4 peut, par exemple, être espacé des produits 2 sous lui en le soulevant. Le lot 4 peut aussi, par exemple, être espacé des produits 2 sous lui en le décalant avec un mouvement dans le propre plan des produits 2, comme par exemple en le tirant légèrement hors de la pile 3 par un mouvement horizontal.

Le moyen de séparation 8 peut donc être simplement une forme de butée qui vient soulever le lot 4, ou carrément une pince ou étau qui vient le saisir par la tranche pour le déplacer avec n'importe quel mouvement.

Avantageusement, le moyen de séparation 8 présente au moins une surface d'appui 9, qui est destinée à venir contre la surface inférieure du lot 4 pour le décaler du reste de la pile 3. Pour éviter de dégrader les produits 2 de la pile 3, et en particulier les produits 2 du lot 4, cette surface d'appui 9 est amenée au contact du lot 4 non pas par un mouvement d'insertion parallèle au plan des produits 2, mais essentiellement perpendiculaire. Ainsi, le contact entre la surface d'appui 9 et le lot 4, nécessaire pour que le moyen de séparation 8 écarte le lot 4 du reste de la pile 3 pour mettre en place le moyen de préhension 6, se fait en amenant la surface d'appui 9 depuis le dessous du lot 4 et non depuis le côté. La surface d'appui 9 arrive au contact du lot 4 avec un mouvement dirigé vers le haut. La surface d'appui 9 n'est pas insérée entre deux produits 2 successifs, mais simplement levée jusqu'à toucher le produit 2 le plus bas du lot 4 à séparer. La surface d'appui 9 peut être formée par une plaque ou aussi portée par un mors que comprend le moyen de séparation 8 en forme d'étau.

Pour ce faire, la surface d'appui 9 profite de l'évidement 12 périphérique que forment ensemble sous le lot 4 à saisir la superposition de plusieurs produits 2 dans la même orientation. Les produits 2 prennent en effet la forme de rectangles plats, s'étendant dans un plan horizontal et superposés verticalement. Le contour d'un produit 2 présente toutefois au moins une échancrure 13. La superposition de plusieurs tels produits 2, dans la même position, crée alors un évidement 12 s'étendant verticalement et défini par les échancrures 13 superposées. La surface d'appui 9 peut ainsi circuler verticalement dans cet évidement 12. On comprend alors qu'en disposant les produits 2 de sorte que les échancrures 13 ne sont pas toutes superposées, il devient possible d'amener la surface d'appui 9 au cœur de l'évidement 12 obtenu par la superposition de plusieurs produits 2 dans le même sens, et de la déplacer vers le haut jusqu'à ce qu'elle vienne au contact d'un produit 2 dans un autre sens et dont l'échancrure 13 se trouve alors ailleurs, par exemple un produit 2 tourné de 180 degrés par rapport à ceux sous lui.

Ainsi, la pile 3 est organisée sous forme de groupes ou lots 4, de produits 2 superposés avec la même orientation, de sorte que leurs échancrures 13 se superposent et créent un évidement 12 de circulation pour la surface d'appui 9. Les groupes ou lots 4 successifs dans la pile 3 n'ont toutefois pas la même orientation, ce qui permet à la surface d'appui 9 de venir toucher instantanément par le dessous le produit 2 le plus bas du lot 4 supérieur.

Un mouvement d'insertion du moyen de séparation 8 qui s'étend parallèlement au plan des produits 2 crée en effet une force, même faible, qui tend à entraîner et décaler les produits le long de ce mouvement. Les deux produits 2 entre lesquels est insérée la surface d'appui 9 glissent alors l'un contre l'autre ce qui peut amener à des chutes de produits 2. L'invention permet de résoudre ce problème sans moyen additionnel de maintien en position, du type pression verticale ou contre butée, etc.

Dans certains modes de réalisation préférés, le moyen de séparation 8 prend lui aussi la forme d'un étau ou pince, qui vient saisir le lot 4 par la tranche. On comprendra que le moyen de séparation 8 a non seulement une surface d'appui 9, mais aussi une contre butée contre laquelle la surface d'appui 9 peut serrer les produits 2 du lot 4. L'avantage d'utiliser une telle pince ou étau est que la position des produits 2 du lot 4 est sécurisée pendant que le lot 4 est décalé pour que le moyen de préhension 6 ait accès au moins à sa surface inférieure, mais aussi que le mouvement de séparation puisse prendre tout type de trajectoire.

Le lot 4 que traite le dispositif d'extraction 1 contient l'ensemble des produits 2, à partir de celui le plus en haut de la pile 3, qui ont la même orientation et qui ont, sous eux, plusieurs produits 2 positionnés de la même manière entre eux, mais différemment des produits 2 du lot 4, de sorte que ces produits 2 du dessous créent un évidement 12 dans lequel la surface d'appui 9 peut circuler vers le haut, comme il a été décrit.

Préférablement, au moins un parmi le moyen de séparation 8 et le moyen de préhension 6 est escamotable ou au moins mobile au sein du châssis 5. Par exemple, le moyen de séparation 8 est fixe dans le châssis 5 et c'est le moyen robotique 7 sur lequel est monté le châssis 5 qui assure que le moyen de séparation 8 arrive contre le lot 4 de produits 2. Avec un moyen de préhension 6 mobile dans le châssis 5, il est alors possible de l'amener contre la tranche du lot 4 à extraire. Le moyen de préhension 6 est ainsi escamotable : il est rétracté lorsque le châssis 5 amène le moyen de séparation 8 contre le lot 4, puis est sorti pour saisir le lot 4.

Le moyen robotique 7 assure ainsi la mise en position du moyen de séparation 8, voire le mouvement de séparation du lot 4 lui-même. Le moyen de préhension 6 est monté sur un actionneur dont la manœuvre permet ensuite d'amener le moyen de préhension 6 contre le lot 4, en conservant le châssis 5 fixe. Fermer ensuite l'étau que forme le moyen de préhension 6 permet de relier complètement le lot 4 au châssis 5 pour que le moyen robotique 7 puisse déplacer le lot 4. En position escamotée, le moyen de préhension 6 est donc en retrait par rapport au moyen de séparation 8, de sorte qu'il ne vient pas en collision avec la pile 3 lorsque le moyen de séparation 8 doit être au contact du lot 4.

Les produits 2 sont d'un contour essentiellement rectangulaire, et plan. Chaque produit 2 s'étend donc dans un plan produit 14. La surface d'appui 9, pour venir au contact du produit 2 inférieur dans le lot 4, est animée d'un mouvement essentiellement perpendiculaire au plan produit 14. Au préalable, le châssis 5 s'approche du lot 4 avec un mouvement parallèle au plan produit 14, en particulier perpendiculaire à la tranche à saisir. Cette direction d'insertion frontale 10 est définie par la géométrie du moyen de préhension 6 en forme de pince et correspond à la direction de déplacement d'un objet qui doit venir dans le fond de la pince. Cette direction d'insertion frontale 10 est parallèle à un bord des produits 2 lorsque le lot 4 est saisi dans le moyen de préhension 6, à savoir le bord correspondant à la tranche que ne saisit pas le moyen de préhension 6. La direction transversale 11 s'étend alors perpendiculairement à cette direction d'insertion frontale 10, et dans le plan que forme le produit 2 lorsqu'il est dans le moyen de préhension 6.

Autrement dit, le châssis 5 présente, d'une part, une direction transversale 11 qui correspond à la direction dans laquelle s'étend la tranche par laquelle le moyen de préhension 6 saisit le lot 4, et, d'autre part, une direction d'insertion frontale 10 qui correspond alors à la direction dans laquelle s'étend la tranche perpendiculaire.

Dans certaines configurations, le moyen de séparation 8 et le moyen de préhension 6 sont fixes dans le châssis 5, et c'est le mouvement de ce dernier qui amène les dits moyens contre le lot 4 pour qu'ils puissent, pour le moyen de séparation 8, le soulever voire le pincer, et, pour le moyen de préhension 6, le pincer.

Dans certaines autres configurations, le moyen de séparation 8 et le moyen de préhension 6 sont montés dans le châssis 5 de sorte à pouvoir être animés d'un mouvement relatif l'un par rapport à l'autre le long de la direction d'insertion frontale 10 et/ou de la direction transversale 11.

Par exemple, le moyen de préhension 6 peut être monté dans le châssis 5 à l'aide d'un actionneur du type vérin ou autre actionneur linéaire, qui s'étend ou s'escamote avec un mouvement dans la direction d'insertion frontale 10. Cela permet, comme décrit ci-dessous, d'approcher, grâce au mouvement du moyen robotique 7, le châssis 5 de la pile 3 pour que le moyen de séparation 8 écarte le lot 4 à extraire du reste de la pile 3. Il suffit ensuite de sortir l'actionneur du moyen de préhension 6 pour que celui-ci entoure la tranche du lot 4 qu'il doit saisir.

Par construction dans le châssis 5 ou par mouvement de ce dernier, le moyen de préhension 6 et le moyen de séparation 8 peuvent ne pas être alignés dans la direction transversale 11 lorsque le moyen de séparation 8 doit soulever le lot 4. Le moyen de préhension 6 est alors en retrait, soit par escamotage dans le châssis 5, soit par position du châssis 5 dans le cas de moyens qui y sont montés fixes.

La mobilité dans le châssis 5 peut provenir du montage sur un actionneur piloté du moyen de séparation 8 et/ou du moyen de préhension 6. Par exemple, le moyen de préhension 6 peut être fixe dans le châssis 5, et le moyen de séparation 8 est monté sur un actionneur mobile dans la direction d'insertion frontale 10 qui en permet l'escamotage. Le moyen de préhension 6 et le moyen de séparation 8 sont éloignés l'un de l'autre dans la direction transversale 11 et immobiles l'un par rapport à l'autre dans cette direction. Le moyen de séparation 8 et le moyen de préhension 6 prennent tous deux la forme d'une pince, dont les fonds sont parallèles mais toutefois décalés lorsque le moyen de préhension 6 est en position escamotée.

Pour extraire un lot 4, le châssis 5 est approché de la pile 3 de sorte que la surface d'appui 9 que porte le mors inférieur de la pince que forme de moyen de séparation 8 se trouve dans un évidement 12 sous le lot à extraire. Cette pince est ensuite fermée pour que le moyen de séparation 8 saisisse le lot 4. Une fois le lot 4 saisi par le moyen de séparation 8, il est soulevé pour l'écarter des autres de la pile 4, par mouvement du châssis 5 préférablement, voire par mouvement vers le haut du moyen de séparation 8 au sein du châssis 5. L'actionneur sur lequel est monté le moyen de préhension 6 est ensuite mis en fonctionnement de sorte à faire sortir le moyen de préhension 6 en direction du lot 4. Le mors inférieur du moyen de préhension 6 en forme de pince s'insère alors dans l'espace entre le lot 4 et le produit 2 sous lui dans la pile 3, créé par le mouvement préalable du moyen de séparation 8. L'autre mors se trouve bien sûr au-dessus du lot 4. Une fois que le moyen de préhension 6 est actionné, il serre donc le lot 4 plus fortement que ne peut le faire le moyen de séparation 8. En effet, devant circuler dans l'évidement 12, il est de taille limitée et de position définie non pas par la nécessité de ne pas déformer le lot 4 au cours du trajet, mais par l'emplacement des échancrures 13 sur les produits 2.

On notera que pendant au moins un court instant, le moyen de séparation 8 et le moyen de préhension 6 agissent simultanément sur le lot 4, à deux endroits différents. Dans certaines variantes, le maintien du lot 4 dans le châssis 5 lors du trajet est obtenu à la fois par le serrage du moyen de préhension 6 et du moyen de séparation 8.

Une fois le lot 4 serré par le moyen de préhension 6, il suffit que le moyen robotique 11 déplace le châssis 5 monté sur lui pour que tout le lot 4 soit emmené. La libération du lot 4 se fait bien entendu en libérant le moyen de préhension 6, voire aussi, si nécessaire, le moyen de séparation 8. En prévision d'un nouveau cycle, le moyen de préhension 6 est ensuite escamoté grâce à l'actionneur sur lequel il est monté. Les fonds des pinces que forment le moyen de séparation 8 et le moyen de préhension 6 ne sont alors plus dans le même plan, dans le but d'éviter que l'action du moyen de séparation 8 ne s'accompagne d'une insertion du moyen de préhension 6 au cœur de la pile 3.

Dans d'autres réalisations, le moyen de préhension 6 et le moyen de séparation 8 sont mobiles l'un par rapport à l'autre dans le châssis 5 le long de la direction transversale 11, voir par exemple figure 2. Comme il va être décrit, cela permet de réduire le mouvement que doit créer le moyen de séparation 8, voire aussi d'insérer plus tôt le moyen de préhension 6.

Par exemple, le moyen de préhension 6 est monté sur un actionneur qui s'étend dans la direction transversale 11, voir figure 3. Dans une première position, le moyen de préhension 6 est contre le moyen de séparation 8. Dans une deuxième position, le moyen de préhension 6 est éloigné de lui, ce qui permet alors de saisir le lot 4 à l'endroit adéquat pour le trajet, tout en ayant inséré la surface d'appui 9 dans l'évidement 12 situé ailleurs. De préférence, le moyen de préhension 6 est monté sur une paire d'actionneurs pour le mouvoir dans le châssis 5, l'un d'eux lui conférant une mobilité dans la direction d'insertion frontale 10 et l'autre lui conférant une mobilité dans la direction transversale 11. Le moyen de séparation 8 peut, quant à lui, être fixe dans le châssis 5, et son mouvement par rapport à la pile 3 est donc directement défini par le mouvement du châssis 5 lui-même.

L'opération d'extraction se passe alors en approchant le châssis 5 de la pile 3 jusqu'à ce que la surface d'appui 9 du moyen de séparation 8 se trouve dans l'évidement 12 sous le lot 4 à extraire, puis en amenant cette surface d'appui 9 vers le haut pour entraîner le lot 4, en levant le châssis 5 par un mouvement correspondant du moyen robotique 7, voire en fermant finalement la pince que forme le moyen de séparation 8. Le moyen de préhension 6 n'étant pas éloigné du moyen de séparation 8 dans la direction transversale 11, il n'est pas nécessaire de dégager le lot 4 de façon significative. Le moyen de séparation 8 est manœuvré par la sortie de l'actionneur sur lequel il est monté, pour que la pince qu'il forme arrive contre la tranche du lot 4, dans un mouvement de déplacement le long de la direction d'insertion frontale 10. Puis, un mouvement dans la direction transversale 11 est exécuté, éloignant le moyen de préhension 6 du moyen de séparation 8, jusqu'à la position où il doit se trouver pour emmener le lot 4 de façon sûre et sans dégradation. On notera qu'à cet instant, le moyen de préhension 6 circule contre la tranche du lot 4 à saisir ce qui correspond à un mouvement avec un léger angle par rapport au plan des produits 2 encore sur la pile 3. Une fois le moyen de préhension 6 en position, la pince qu'il forme est actionnée et il saisit alors le lot 4 pour un déplacement sans dégrader les produits 2.

Dans certaines cas, en particulier lorsque le moyen de séparation 8 prend la forme d'une pince, il est envisageable d'utiliser le moyen de séparation 8 pour déplacer le lot 4 jusqu'à ce que le moyen de préhension 6 soit au bon endroit contre le lot 4. Ainsi, une fois que le moyen de séparation 8 a saisi le lot 4 au niveau de l'évidement 12, il le déplace par rapport à la pile 3 pour que le moyen de préhension 6, immobile par rapport à la pile 3, puisse saisir le lot 4 au bon endroit. Ce décalage provoqué par le moyen de séparation 8 peut être obtenu en déplaçant le châssis 5 ou en déplaçant le moyen de séparation 8 dans le châssis 5. Le moyen de préhension 6 et le moyen de séparation 8 peuvent donc être proches initialement, puis écartés l'un de l'autre dans la direction transversale 11 par un mouvement du moyen de séparation 8 dans le châssis 5, et, avec lui, un mouvement du lot 4.

Plus précisément, le moyen de préhension 6 peut se trouver, avant l'opération d'extraction, à une extrémité du châssis 5 dans la direction transversale 11, le moyen de séparation 8 se trouvant à côté dans la direction de l'autre extrémité. Le moyen de préhension 6 est initialement escamoté de sorte que le moyen de séparation 8 est davantage en porte à faux. Le châssis 5 est alors avancé pour que le moyen de séparation 8 arrive contre la tranche du lot 4 au niveau de l'évidement et le pince. Le châssis 5 effectue ensuite un léger mouvement vers le haut dans le but d'entraîner le lot 4 vers le haut au niveau de sa prise par le moyen de séparation 8. Le moyen de préhension 6 est ensuite avancé dans la direction d'insertion frontale 10 jusque la tranche du lot 4. Le moyen de séparation 8, tout en tenant le lot 4, s'éloigne alors du moyen de préhension 6 grâce au mouvement d'un actionneur sur lequel il est monté dans le châssis 5. Ce faisant, il entraîne le lot 4 avec lui, sa tranche circulant dans la pince que forme le moyen de préhension 6, non fermée. Une fois le lot 4 correctement positionné par rapport au moyen de préhension 6, celui-ci est actionné pour serrer le lot 4 et pouvoir alors le déplacer grâce au mouvement du châssis 5 provoqué par le moyen robotique 7.

L'avantage est alors que le lot 4 est amené, par le moyen de séparation 8, jusqu'à l'endroit requis pour une prise en charge par le moyen de préhension 6, là où il se trouve, plutôt que de risquer de déstabiliser la pile 3 suite à une collision avec le moyen de préhension 6, plus volumineux. En outre, le moyen de préhension 6 ouvert agit comme un guide pour le déplacement du lot 4 sous l'effet du déplacement du moyen de séparation 8.

Comme il a déjà été dit, dans certaines réalisations, le moyen de séparation 8 consiste essentiellement en une plaque ou pelle qui vient interagir avec le lot 4 par le dessous et porte la surface d'appui. Le lot 4 n'est alors pas pincé, mais tout simplement soulevé par ce moyen de séparation 8 arrivant par le dessous, au niveau des échancrures 13 des produits 2 superposés les uns sur les autres sous lui. Le mouvement du moyen de séparation 8 par rapport à la pile 3 est alors directement celui du châssis 5, donné par le moyen robotique 7. Il est alors aussi envisageable que le moyen de préhension 6 soit lui aussi fixe dans le châssis 5, ce qui permet d'avoir un dispositif d'extraction 1 particulièrement simple puisque les deux moyens sont fixes l'un par rapport à l'autre dans le châssis 5. Le mouvement d'approche consiste alors à venir avec le châssis 5 de sorte que le moyen de séparation 8 arrive dans l'évidement 12 sous le lot 4 à saisir, le châssis 5 étant toutefois dans une position telle que le moyen de préhension 6 ne subit aucune interaction avec la pile 3. Le châssis 5 est ensuite levé pour légèrement décaler le lot 4, puis pivoté de sorte que le moyen de préhension 6 arrive contre la tranche du lot 4 à extraire, tout en conservant l'interaction entre le moyen de séparation 8 et le lot 4. Ainsi, dans un tel mode de réalisation combinant un moyen de séparation 8 fixe dans le châssis 5 avec un moyen de préhension 6 lui aussi fixe dans le châssis 5, la mise en position de ces deux moyens contre le lot 4 se fait grâce aux mouvements du châssis 5. De façon générale, la mobilité du châssis 5 donnée par le moyen robotique 7 complète la mobilité dans le châssis 5 du moyen de séparation 8 et/ou du moyen de préhension 6, pour les amener en position contre le lot 4, c'est-à-dire contre la surface de fond, voire contre la tranche du lot 4.

Dans certains modes de réalisation, le moyen de séparation 8 et le moyen de préhension 6 sont montés sur la même pince, et aussi éventuellement sur un même actionneur qui en assure la mobilité par rapport au châssis 5 au moins dans la direction d'insertion frontale 10. Chacun de ces moyens pince donc le lot 4 par sa tranche. Les mors, et au moins la surface d'appui 9 du moyen de séparation 8 sont ou est de forme adaptée aux échancrures 13. Dans une réalisation avantageuse, le moyen de séparation 8 et le moyen de préhension 6 sont activés pour pincer par un même effecteur. Ainsi, la plaque et la contre plaque d'une seule pince forment, d'une part, les plaques du moyen de séparation 8 et du moyen de préhension 6, et, d'autre part, les contre plaques du moyen de séparation 8 et du moyen de préhension 6.

Le dispositif d'extraction 1 présente alors une unique pince qui remplit tour à tour la fonction du moyen de séparation 8 et la fonction du moyen de préhension 6. Une portion des mors de ladite pince forme les mors du moyen de séparation 8, une autre partie des mors de la même pince formant les mors du moyen de préhension 6. Par exemple, l'extrémité des mors de cette pince peut former le moyen séparation 8 et être ainsi de forme adaptée à s'insérer dans les évidements 12. Le reste des mors de la pince, de plus grande superficie, forme alors le moyen de préhension 6. Bien entendu, la plaque inférieure seule de cette pince peut aussi être la plaque inférieure portant la surface d'appui 9 qui forme le moyen de séparation 8, ce dernier ne pouvant que soulever le lot 4 et non le pincer.

Un procédé de mise en œuvre d'un tel dispositif d'extraction 1 peut alors se dérouler de la façon suivante. Le châssis 5 du dispositif d'extraction 1 est approché de la pile 3 jusqu'à ce que l'extrémité de l'unique pince qu'il porte, qui forme le moyen de séparation 8 sous forme de pince, arrive contre la tranche du lot 4, avec sa surface d'appui 9 circulant dans l'évidement 12 sous le lot 4 à extraire. Le dispositif d'extraction 1 saisit alors le lot 4 avec le moyen de séparation 8 formé par l'extrémité de la pince et donc avec une surface faible, correspondant au maximum à la taille de l'échancrure 13 des produits 2 sous le lot 4 à extraire. Comme il a été dit, la surface d'appui 9 portée par le moyen de séparation 8, vient au contact du dessous du lot 4 par un mouvement essentiellement perpendiculaire au plan produit 14, en direction du lot 4.

Une fois le lot 4 saisi par le moyen de séparation 8, il est légèrement tiré de la pile 3 pour dégager une partie de la surface inférieure du lot 4 par rapport aux produits 2 sous lui dans la colonne. Ce mouvement peut se faire parallèlement au plan produit 14 et amène à tirer le lot 4 et le laisser légèrement en porte à faux au-dessus de la pile 3. Une partie de la surface inférieure du lot 4 plus grande que celle au-dessus de l'évidement 12 devient donc disponible.

On notera que ce mouvement du lot 4 peut se faire en bougeant la pince portant le moyen de séparation 8 dans le châssis 5 ou en bougeant tout le châssis 5 grâce au moyen robotique 7.

Une fois une plus grande portion de la surface inférieure dégagée de la pile 3, le moyen de préhension 6 peut entrer en fonctionnement. Il peut alors venir saisir le lot 4 avec une plus grande superficie de contact, et ce, soit approximativement au même endroit que le moyen de séparation 8 préalablement, soit ailleurs. Par exemple, après avoir tiré le lot 4, la pince peut s'ouvrir puis être avancée à nouveau pour que le fond de la pince s'approche davantage du lot 4, voire vienne à son contact. La partie de la pince en contact avec le lot 4 forme alors le moyen de préhension 6.

Par rapport à la pile 3, le châssis 5 peut avoir bougé ou non lors de cette opération. En outre, on comprend qu'il est envisageable de réaliser la préhension du lot 4 en plus de deux étapes, avec plusieurs déplacements successifs qui dégagent une surface inférieure du lot 4 plus grande à chaque fois.

Le lot 4 est donc mis en porte à faux sur la pile 3 de sorte qu'une surface suffisamment grande est disponible contre son fond pour qu'il soit saisi par le moyen de préhension 6, dont la superficie de contact avec le lot 4 est plus grande que celle du moyen de séparation 8.

Dans un autre mode de réalisation, le moyen de préhension 6 est mobile en rotation par rapport au châssis 5.

Le moyen de préhension sous forme de pince comprend deux mors, lesquels mors, en position ouverte du moyen de préhension, passent de part et d'autre de la pince du moyen de séparation 8.

Ainsi, dans un premier temps, le moyen de séparation 8 sous forme de pince vient s'insérer au niveau de l'évidement 12 sous le lot 4 à extraire. Le moyen de séparation est préférablement fixe par rapport au châssis 5. Dès lors, les mouvements d'insertion selon la direction transversale 11 et selon la direction d'insertion frontale 10 du moyen de séparation pour extraire le lot de produits sont réalisés par le moyen robotique 7.

Dans un second temps, le moyen de séparation en forme de pince se ferme et exerce une pression sur le lot à séparer.

Dans un troisième temps, le moyen de séparation, par l'intermédiaire du moyen robotique 7, sépare le lot du reste de la pile 3.

Dans un quatrième temps, le moyen de préhension 8 sous forme de pince vient saisir le lot de produits en effectuant un mouvement de rotation par rapport au châssis. Lors de ce mouvement, les mors de la pince formant moyen de préhension 8 sont en position ouverte et passent chacune d'un côté de la pince du moyen de séparation. Le moyen de préhension se positionne parallèlement au moyen de séparation. Le moyen de séparation se trouve à l'intérieur de la pince formant le moyen de préhension 8, lorsque celui-ci pivote pour venir en position de travail. Les feuilles ou plaques cartonnées que doit saisir le moyen de préhension 8 sont donc naturellement comprises entre les deux mors de la pince du moyen de préhension, puisqu'elle sont initialement maintenues par le moyen de séparation que le moyen de préhension 8 enrobe au moins temporairement lors de sa mise en position.

La pince du moyen de séparation se trouve donc au moins temporairement entre les mors du moyen de préhension 8 qui va vers sa position de travail, et, partant, il en va de même pour les feuilles que saisit ladite pince et qui doivent ensuite être prises par le moyen de préhension, ce qui évite toute collision entre le moyen de préhension et les produits carton. Le moyen de préhension 8 a donc un bras et une pince à son extrémité. Le bras est mobile en rotation à l'extrémité opposée, et ce autour d'un axe sensiblement perpendiculaire aux plans que présentent respectivement le moyen de préhension 8 et le moyen de séparation.

Puis, le moyen de préhension sous forme de pince saisit le lot de produit en exerçant une pression.

Si la taille des produits le requiert, le dispositif comprend une pluralité de moyens de préhension répartis dans le châssis qui fonctionnent comme décrit ci-dessus.

Enfin, le moyen robotique sur lequel est fixé le châssis déplace le lot de produits pour l'amener à destination.

La pression exercée par le moyen de séparation a pour fonction de s'assurer que le moyen de préhension passe à l'endroit où l'épaisseur du lot est la plus faible afin d'éviter toute interférence entre le lot de produits à saisir et le moyen de préhension. En effet, cette interférence pourrait dégrader le lot de produits et provoquerait donc un arrêt machine.

Grâce à l'invention, il est ainsi possible notamment de transférer un nombre précis de produits 2. En effet, le dispositif de transfert 1 assure la prise et le déplacement d'un nombre prédéfini de produits 2, qui correspond au nombre de produits 2 dans un groupe sous lequel les autres produits 2 sont superposés en un groupe orienté différemment. La prise par le dispositif d'extraction 1 puis le déplacement du lot 4 se font sans dégradation du lot 4 ni risque de faire tomber le lot 4 ou le reste de la pile 3, puisque les mouvements d'approche se font par le dessous, vers le haut. Une telle installation ne nécessite donc pas de contre butée comme dans les configurations où un outil de prise vient saisir des produits depuis le côté.

Bien que la description ci-dessus se base sur des modes de réalisations particuliers, elle n'est nullement limitative de la portée de l'invention, et des modifications peuvent être apportées dans les limites des revendications annexées, notamment par substitution d'équivalents techniques ou par combinaison différente de tout ou partie des caractéristiques développées ci-dessus.

## Revendications

1. Procédé pour extraire d'une pile (3) verticale un lot (4) de produits (2) plats superposés non liés entre eux formant le haut de ladite pile (4), pour alimenter un magasin d'une machine munie d'une formeuse de caisse, comprenant la séquence des étapes consistant à
- séparer légèrement le lot (4) du reste de la pile (3) sous lui à l'aide d'un moyen de séparation (8),
- saisir le lot (4) par la tranche à l'aide d'un moyen de préhension (6), et
- déplacer le lot (4) en direction d'un magasin de stockage d'une machine de traitement du type encaisseuse ou formeuse de caisse,
- la séparation du lot (4) étant réalisée en amenant initialement une surface d'appui (9) vers le haut, contre le dessous du lot (4), **caractérisé en ce que**
- lesdits moyen de séparation (8) et moyen de préhension (6) sont montés dans un châssis (5) destiné à être monté à l'extrémité d'un moyen robotique (7), du type robot multi axe,
- ledit déplacement du lot (4) étant réalisé par mouvement du châssis (5), à l'aide dudit moyen robotique (7),
- ladite surface d'appui (9) arrivant vers le haut et par le dessous contre le lot (4) en circulant dans un évidement (12) créé par les échancrures (13) d'une pluralité de produits (2) superposés sous le lot (4).

2. Procédé selon la revendication 1, où la séparation du lot (4) est réalisée à l'aide d'un moyen de séparation (8) en forme d'étau piloté pour prendre le lot (4) par la tranche et dont l'un des mors porte la surface d'appui (9).

3. Procédé selon l'une quelconque des revendications 1 ou 2, où saisir le lot (4) pour le déplacer est réalisé à l'aide d'un moyen de préhension (6) du type étau piloté, lequel agit dans une zone du lot (4) différente de celle où agit la surface d'appui (9).

4. Procédé selon l'une quelconque des revendications 1 à 3, où le moyen de préhension (6) est amené dans sa position de saisie du lot (4) en le déplaçant, par rapport à la surface d'appui (9), le long de la tranche du lot (4) saisi et/ou vers la tranche opposée.

## Patentansprüche

1. Verfahren zum Extrahieren, von einem vertikalen Stapel (3), eines Loses (4) flacher, übereinander liegender Produkte (2), die untereinander nicht verbunden sind und die den oberen Teil des Stapels (4) bilden, um ein Magazin einer, mit einem Schachtelformeinheit ausgestattete Maschine zu versorgen, beinhaltend die Schrittfolge, die aus Folgendem besteht:
- leichtes Trennen des Loses (4) von dem Rest des Stapels (3) unter ihm, unter Verwendung eines Trennmittels (8),
- Greifen des Loses (4) am Rand, unter Verwendung eines Greifmittels (6) und
- Umsetzen des Loses (4) in Richtung eines Speichermagazins einer Verarbeitungsmaschine vom Typ Verpackungs- oder Kistenformmaschine,
- das Trennen des Loses (4) durchgeführt wird, indem anfänglich eine Auflagefläche (9) nach oben gegen die Unterseite des Loses (4) geführt wird,
**dadurch gekennzeichnet, dass**
- das Greifmittel (6) und das Trennmittel (8) in einem Gestell montiert sind, dem zum Einbau am Ende eines Mehrachsenrobotertyp Robotermittel bestimmt ist,
- die Umsetzung des Loses (4) durch Bewegung des Gestells (5) unter Verwendung der Robotermittel erfolgt,
- die Auflagefläche (9) nach oben und von unten gegen das Los (4) gelangt, indem sie in einer Aussparung (12) fährt, die durch die Ausschnitte (13) einer Vielzahl von übereinander liegenden Produkten (2) unter dem Los (4) gebildet wird.

2. Verfahren nach Anspruch 1, wobei
das Trennen des Loses (4) unter Verwendung eines Trennmittels (8) in Form einer gesteuerten Zwinge durchgeführt wird, um das Los (4) am Rand aufzunehmen und dessen eine Backe die Auflagefläche (9) aufweist.

3. Verfahren nach einem der Ansprüche 1 oder 2, wobei
das Greifen des Loses (4), um es umzusetzen, unter Verwendung eines Greifmittels (6) vom Typ gesteuerte Zwinge durchgeführt wird, das in einem Bereich des Loses (4) wirkt, der sich von dem, in dem die Auflagefläche (9) wirkt, unterscheidet.

4. Verfahren nach einem der Ansprüche 1 bis 3, wobei
das Greifmittel (6) in seine Position zum Greifen des Loses (4) geführt wird, indem es in Bezug auf die Auflagefläche (9) entlang des Rands des gegriffenen Loses (4) und/oder hin zu dem gegenüberliegenden Rand bewegt wird.

## Claims

1. Method for extracting from a vertical pile (3) a batch (4) of stacked flat products (2) that are not connected to one another and that form the top of said pile (4), to feed a storage unit of a machine equipped with a box shaper, comprising the sequence of steps consisting in
- slightly separating the batch (4) from the rest of the pile (3) under it by using a separation means (8),
- grasping the batch (4) section by section using a gripping means (6), and
- moving the batch (4) in the direction of a storage unit of a treatment machine of the packaging or box shaper type,
- the separation of the batch (4) being carried out by initially bringing a support surface (9) upward, against the bottom of the batch (4), **characterized in that**:
- said separation means (8) and gripping means (6) are mounted in a frame (5) that is designed to be mounted at the end of a robotic means (7), of the multi-axis robot type,
- said movement of the batch (4) being done by moving the frame (5) using the robotic means (7),
- the support surface (9) coming upward and from below against the batch (4) by traveling in a recess (12) created by the scallopings (13) of a plurality of products (2) stacked under the batch (4).

2. Method according to Claim 1, wherein
the separation of the batch (4) is carried out using a separation means (8) in the form of a controlled vise for taking the batch (4) section by section and one of whose bits carries the support surface (9).

3. Method according to any one of Claims 1 or 2, wherein
grasping the batch (4) for moving it is done using a gripping means (6) of the controlled vise type, which acts in a zone of the batch (4) that is different from the one where the support surface (9) acts.

4. Method according to any one of Claims 1 to 3, wherein
the gripping means (6) is brought into its position for grasping the batch (4) by moving it, in relation to the support surface (9), along the section of the batch (4) that is grasped and/or toward the opposite section.
